# EUROPÄISCHE PATENTSCHRIFT

(11) **EP 1 674 832 B1**
(45) Veröffentlichungstag und Bekanntmachung des Hinweises auf die Patenterteilung: **17.09.2008**
(21) Anmeldenummer: 05110896.7
(22) Anmeldetag: 17.11.2005
(51) Int. Cl.: G01D 5/347

(54) **Geberrad mit Rückdrehcodierung für einen Kurbelwellen-oder Nockenwellensensor**
Encoder wheel with reverse rotation encoding for a crankshaft or camshaft position sensor
Roue dentée munie d'un codage de rotation inverse destinée à un capteur d'arbre à manivelle ou d'arbre à cames

(30) Priorität: 15.12.2004 DE 102004060336
(43) Veröffentlichungstag der Anmeldung: 28.06.2006
(73) Patentinhaber: Continental Automotive GmbH, 30165 Hannover (DE)
(72) Erfinder: Kettl, Thomas, 94348, Atting (DE)

(56) Entgegenhaltungen:
- EP-A- 1 150 009
- FR-A1- 2 551 203
- US-A- 5 070 727

## Beschreibung

Die vorliegende Erfindung betrifft eine Vorrichtung zum Erfassen der Winkelposition einer Kurbelwelle oder einer Nockenwelle einer Brennkraftmaschine, insbesondere einen Kurbelwellensensor, der mit einem Geberrad und einem Sensorelement ausgestattet ist.

Kurbelwellensensoren bekannter Konstruktion dienen dem Erfassen der Drehzahl und der Winkelposition der Kurbelwelle. Über die ermittelte Winkelposition erfolgt eine Synchronisation mit der Nockenwelle, den Zündvorgängen sowie der Ventilsteuerung der Brennkraftmaschine. Der oben genannte Kurbelwellensensor umfasst beispielsweise ein Geberrad mit regelmäßig beabstandeten Zähnen und mindestens einer Informationsmarke. Die Informationsmarke kann zwischen beliebigen Zähnen angeordnet sein, wie beispielsweise eine Referenzlücke. Zudem kann jeder beliebige Zwischenraum zwischen benachbarten Zähnen eine Informationsmarke darstellen.

FR-A1-2 551 203 beschreibt eine Vorrichtung zum Erfassen der Winkelposition einer Kurbelwelle, die sich aus einer Fahnenscheibe und einem Geberrad zusammensetzt. Das Geberrad umfasst umfänglich gleichmäßig beabstandete und ausgebildete Zähne, während die Fahnenscheibe eine bestimmte Anzahl unterschiedlich ausgebildeter und unterschiedlich voneinander beabstandeter Zähne aufweist. Die Drehung der Fahnenscheibe wird basierend auf den Signalen des Geberrads ausgewertet, da den individuell ausgebildeten und beabstandeten Zähnen des Fahnenrads jeweils eine individuelle Anzahl von Signalen des Geberrads zuordenbar ist. Aufgrund des Zusammenwirkens von Geberrad und Fahnenrad und der entsprechenden Messwertauswertung ist die hier beschriebene Vorrichtung aufwendig in ihrer Konstruktion und Anwendung.

EP-A-1 150 009 beschreibt ein Geberrad für Kurbel- oder Nockenwelle. Auf dem Umfang des Geberrads sind in gleichmäßigen Winkelabständen eine Mehrzahl von Winkelmarken und eine Informationsmarke angeordnet. Die Informationsmarke wird durch eine Lücke, einen extrabreiten Zahn oder durch einen schmalen Zahn gebildet.

Bekannte Kurbelwellensensoren haben den Nachteil, dass beim Rückwärtsdrehen der Kurbelwelle die Referenzlücke durch die gleiche zeitliche Signalfolge repräsentiert wird, als würde sich die Kurbelwelle vorwärts drehen. Somit kann im Falle eines Rückdrehens eine Synchronisation der abhängigen Prozesse auf eine rückwärts drehende Kurbelwelle erfolgen, was zwangsläufig zu Störungen der Brennkraftmaschine führt.

Es ist daher die Aufgabe der vorliegenden Erfindung, eine Vorrichtung zum Erfassen der Winkelposition einer Kurbelwelle oder einer Nockenwelle bereitzustellen, die gleichzeitig eine Synchronisation auf eine rückwärts drehende Kurbel- oder Nockenwelle verhindert.

Die vorliegende Erfindung ist im unabhängigen Anspruch 1 definiert. Modifikationen und Weiterentwicklungen gehen aus den abhängigen Ansprüchen hervor.

Das Geberrad der erfindungsgemäßen Vorrichtung zeichnet sich dadurch aus, dass die an die mindestens eine Informationsmarke, insbesondere die Referenzlücke, angrenzenden Winkelmarken, insbesondere die Zähne, unterschiedlich ausgebildet sind, so dass in Abhängigkeit von der Drehrichtung des Geberrades unterschiedliche Signalfolgen im Sensorelement generierbar sind.

Gemäß einer bevorzugten Ausführungsform der vorliegenden Erfindung werden die durch das gezahnte Geberrad erzeugten fallenden Signalflanken durch das elektronische Betriebssteuergerät ausgewertet. Dadurch, dass Zähne unterschiedlicher Breite an die mindestens eine Referenzlücke angrenzen, wird in Abhängigkeit von der Drehrichtung des Geberrades eine unterschiedliche zeitliche Folge der fallenden Signalflanken erzeugt. Dreht sich die Kurbelwelle rückwärts, wird die Informationsmarke bzw. Referenzlücke aufgrund der Unterschiede zu dem erwarteten Signal nicht erkannt, so dass keine Synchronisation mit den abhängigen Prozessen stattfindet.

Die vorliegende Erfindung wird anhand einer bevorzugten Ausführungsform beschrieben, die in den Figuren dargestellt ist.
Es zeigen:
- Fig. 1: eine schematische Darstellung eines Geberrades mit Sensor gemäß einer bevorzugten Ausführungsform der vorliegenden Erfindung,
- Fig. 2: eine Signalfolge, wenn sich das Geberrad aus Fig. 1 in Richtung A bewegt,
- Fig. 3: eine Signalfolge, wenn sich das Geberrad aus Fig. 1 in Richtung B bewegt, und
- Fig. 4: eine vergleichende schematische Darstellung einer Signalfolge gemäß einer bevorzugten Ausführungsform der vorliegenden Erfindung und einer Signalfolge des Standes der Technik.

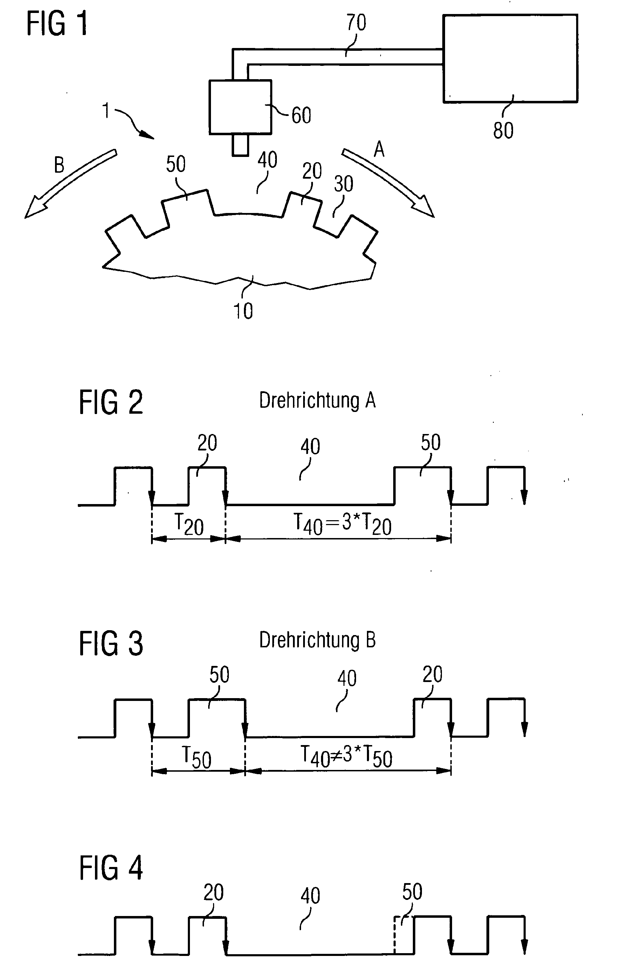

Die vorliegende Erfindung wird unter Bezugnahme auf die bevorzugte Ausführungsform näher erläutert, wie sie in Fig. 1 schematisch dargestellt ist. Die Vorrichtung 1 zum Erfassen der Winkelposition einer Kurbelwelle oder einer Nockenwelle einer Brennkraftmaschine umfasst ein gezahntes Geberrad 10 und ein Sensorelement 60. Das Sensorelement 60 ist über Datenleitungen 70 mit einem elektronischen Betriebssteuergerät 80 verbunden. Das Betriebssteuergerät 80 wertet die durch das Sensorelement 60 aufgenommenen Signalimpulse aus und nutzt sie zur Synchronisation der Kurbelwelle (nicht gezeigt) mit der Nockenwelle. Von dieser Synchronisation abhängige Prozesse sind beispielsweise die Steuerung der Einlass- und Auslassventile sowie die Steuerung der Zündvorgänge in den einzelnen Zylindern der Brennkraftmaschine.

Obwohl als bevorzugte Ausführungsform der vorliegenden Erfindung ein gezahntes Geberrad 10 mit Sensorelementen 60 beschrieben wird, ist die vorliegende Erfindung ebenfalls umsetzbar, beispielsweise mit einem Sensor und einem Geberrad basierend auf dem Hall-Effekt oder anderer Signalerzeugungsprinzipien.

Das gezahnte Geberrad 10 ist direkt oder indirekt mit der Nockenwelle oder der Kurbelwelle einer Brennkraftmaschine verbindbar, um entsprechend der Drehung der Nockenwelle oder der Kurbelwelle Signale in dem benachbart angeordneten Sensorelement 60 zu erzeugen. Auf dem Umfang des Geberrades 10 sind Winkelmarken 20 gleichmäßig beabstandet angeordnet. Die als Zähne ausgebildeten Winkelmarken 20 sind jeweils gleichmäßige Winkelabstände von ihren benachbarten Zähnen entfernt. Die durch die gleichmäßigen Winkelabstände gebildeten Lücken sind mit dem Bezugszeichen 30 bezeichnet.

Die gleichmäßige Anordnung der Zähne 20 ist durch eine Informationsmarke 40 unterbrochen, die als Referenzlücke bezeichnet wird. Die Referenzlücke 40 hat für gewöhnlich eine Breite, wie sie durch zwei gleichmäßig beabstandete Zähne 20 eingenommen werden würde. Neben der Anordnung nur einer Referenzlücke 40 an dem Geberrad 10 ist es ebenfalls möglich, zwei oder mehr Referenzlücken 40 gleichmäßig über den Umfang des Geberrades 10 zu verteilen. Es ist ebenfalls möglich, eine bestimmte Anzahl benachbarter oder in bestimmter Weise beabstandeter Lücken 30 als Informationsmarken 40 zu definieren. Diese können dann in gleicher Weise wie die beispielgebende Referenzlücke gemäß dem nachfolgenden konstruktiven Prinzip eingegrenzt werden.

Der Referenzlücke 40 benachbart sind der Zahn 20 und ein verbreiterter Zahn 50, so dass zwei unterschiedlich ausgebildete Winkelmarken die Informationsmarke bzw. Referenzlücke 40 begrenzen. Die Begrenzung der Referenzlücke 40 durch zwei unterschiedlich ausgebildete Zähne 20, 50 führt in Abhängigkeit von der Drehrichtung A, B des Geberrades 10 zu einer unterschiedlichen zeitlichen Folge von auszuwertenden Signalflanken, wie unten näher erläutert ist.

Dem gezahnten Geberrad 10 benachbart ist ein Sensorelement 60 angeordnet. Bei Drehung des gezahnten Geberrades 10 bewegen sich die Zähne 20, 50 und Lücken 30, 40 an dem Sensorelement 60 vorbei und erzeugen auf diese Weise Signalimpulse, die später als Rechteckimpulse (vgl. Figuren. 2 bis 4) in dem elektronischen Betriebssteuergerät 80 ausgewertet werden.

Wird das Geberrad 10 in Drehrichtung A gedreht, bewegen sich zunächst die dem Zahn 20 vorgelagerten Zähne bzw. Winkelmarken an dem Sensorelement 60 vorbei. Diese vorgelagerten Zähne weisen eine einheitliche Form und einen einheitlichen Winkelabstand auf, so dass nach der Signalverarbeitung regelmäßige Rechteckimpulse zur Auswertung bereitstehen. Bevorzugt werden nur die fallenden Signalflanken der oben genannten Rechteckimpulse und deren zeitlicher Abstand ausgewertet.

In Fig. 2 ist die zeitliche Folge der Rechteckimpulse und der fallenden Flanken der Zähne 20 und 50 schematisch dargestellt. Die fallenden Flanken sind jeweils durch Pfeile gekennzeichnet. Bevor die Referenzlücke 40 aus Fig. 1 an dem Sensorelement 60 vorbei bewegt wird, erzeugt der der Referenzlücke 40 benachbarte Zahn 20 die letzte fallende Flanke vor der Referenzlücke 40. Aus dem Abstand der zwei zuletzt ermittelten fallenden Flanken wird die Breite T₂₀ des Signalimpulses des Zahnes 20 bzw. die Zahnzeit des Zahns 20 bestimmt. Diese letzte Zahnzeit T₂₀ vor der Referenzlücke 40 wird verwendet, um einen Erwartungswert für die Dauer der Referenzlücke zu bestimmen. Stimmt dieser Erwartungswert annähernd mit der Breite der Referenzlücke 40 überein, wird die Referenzlücke 40 erkannt und eine Synchronisation zwischen der Kurbelwelle und anderen Vorgängen kann durchgeführt werden.

Da bekannt ist, dass die Breite der Referenzlücke 40 durch zwei gleichmäßig beabstandete, jedoch fehlende Zähne gebildet wird, wird die nächste fallende Flanke nach einer Referenzlückenzeit T₄₀ = 3 · T₂₀ erwartet. Diese Annahme setzt eine annähernd konstante Drehzahl der Brennkraftmaschine voraus. Drehzahlschwankungen können jedoch ebenfalls in die erwartete Referenzlückenzeit T₄₀ eingerechnet werden, um den obigen Erwartungswert bzw. den Wert zum Erkennen der Referenzlücke 40 auf den Betrieb der Brennkraftmaschine abzustimmen.

Der Anfang des der Referenzlücke 40 folgenden verbreiterten Zahnes 50 wurde in die Referenzlücke 40 hineinversetzt (vgl. gestrichelte Linie in Fig. 4). Das Ende des verbreiterten Zahnes 50 ist an der gleichen Stelle angeordnet, als hätte der Zahn 50 die gleiche Form wie der Zahn 20. Weil jedoch nur die fallenden Flanken der Signalimpulse ausgewertet werden, wirkt sich in Drehrichtung A die Form des verbreiterten Zahns 50 nicht auf die Bestimmung der Referenzlückenzeit, d. h. den Abstand zwischen den fallenden Flanken des Zahns 20 und des Zahns 50, aus. Dreht somit das Geberrad 10 und auch die direkt oder indirekt verbindbare Nockenwelle oder Kurbelwelle vorwärts, d. h. in Drehrichtung A, dann sind die fallenden Flanken zur Bestimmung der Referenzlücke 40 auf bekannte Weise zeitlich angeordnet und es ergibt sich eine Referenzlückenzeit T₄₀ = 3 · T₂₀.

Dreht das Geberrad 10 oder die verbundene Nockenwelle oder Kurbelwelle rückwärts, d. h. in Drehrichtung B, dann wird zunächst der verbreiterte Zahn 50 und dann die Referenzlücke 40 an dem Sensorelement 60 vorbei bewegt. Zudem werden zuvor steigende Flanken der Signalimpulse der Zähne 20, 50 zu fallenden Flanken und dienen nun der zeitlichen Auswertung der Drehbewegung. Diese Signalfolge ist in Fig. 3 schematisch dargestellt.

Durch Umkehrung der Drehrichtung des Geberrades 10 bestimmt sich die letzte vor der Referenzlücke 40 bestimmte Zahnzeit, die zur Erkennung der Referenzlücke 40 dient, aus der Zahnzeit bzw. der Signalimpulsbreite des verbreiterten Zahns 50. Die fallende Flanke des verbreiterten Zahns 50 wird jetzt durch das Ende des Zahns 50 erzeugt, das in die Referenzlücke 40 hineinversetzt worden ist. Daraus folgt im Vergleich zur Drehrichtung A bzw. zu einer vorwärts drehenden Kurbelwelle, dass die Zahnzeit T₅₀ des letzten vor der Referenzlücke 40 bestimmten Zahns durch die Verbreiterung des Zahns 50 verlängert worden ist. Für das Erkennen der Referenzlücke 40 wird jedoch genauso wie bei einer Drehung in Richtung A der dreifache Wert der vorhergehenden Zahnzeit T₄₀ = 3 · T₅₀ als Referenzlückenzeit angesetzt. Die Referenzlücke 40 ist jedoch aufgrund des verbreiterten Zahnes 50 kürzer als in Drehrichtung A mit einer Referenzlückenzeit T₄₀≠3 · T₅₀. Daher wird die Referenzlücke 40 nicht erkannt oder aus der durch die Rückdrehcodierung erzeugten Signalfolge wird das Rückdrehen der Kurbelwelle erkannt. Das fehlende Erkennen der Referenzlücke 40 oder das Erkennen der Rückdrehung der Kurbelwelle ist Grundlage dafür, dass eine weitere Synchronisation der anderen Prozesse auf eine rückdrehende, d. h. in Richtung B drehende, Kurbelwelle nicht durchgeführt wird.

Das Versetzen der steigenden Flanke des verbreiterten Zahns 50 in die Referenzlücke 40 hinein ist in Fig. 4 schematisch durch eine gestrichelte Linie dargestellt. Im Vergleich dazu zeigt die durchgezogene Linie eine Folge von Rechteckimpulsen gemäß dem Stand der Technik. Diese Verbreiterung des die Referenzlücke 40 begrenzenden Zahns 50 hat bei einer Vorwärtsdrehung der Kurbelwelle keinen ändernden Einfluss auf die zeitliche Signalfolge des Geberrades 10, weil nur fallende Flanken ausgewertet werden. Bei Rückwärtsdrehung des Geberrades 10 wird durch die andere Form des verbreiterten Zahns 50 die letzte vor der Referenzlücke 40 gemessene Zahnzeit T₅ₒ verlängert und gleichzeitig die Dauer der Referenzlückenzeit T₄₀ verkürzt. Auf diese Weise wird das Erkennen der Referenzlücke 40 und daher eine Synchronisation bei rückwärts drehender Kurbelwelle verhindert oder es wird aus der Signalfolge an der Referenzlücke 40 ein Rückdrehen der Kurbelwelle erkannt und eine Synchronisation unterbrochen.

## Patentansprüche

1. Vorrichtung (1) zum Erfassen der Winkelposition einer Kurbelwelle oder einer Nockenwelle einer Brennkraftmaschine, die die folgenden Merkmale umfasst:
a. ein Geberrad (10), das mit der Kurbel- oder Nockenwelle direkt oder indirekt drehfest verbindbar ist, und an dessen Umfang in gleichmäßigen Winkelabständen verteilte Winkelmarken (20, 50) und mindestens eine Informationsmarke (40) angeordnet sind,
b. ein Sensorelement (60), das benachbart zum Umfang des Geberrads (10) derart angeordnet ist, dass es in Abhängigkeit von den das Sensorelement (60) passierenden Winkelmarken (20, 50) ein elektrisches Signal erzeugt,
**dadurch gekennzeichnet, dass**
c. die Informationsmarke (40) durch zwei gleichmäßig beabstandete, fehlende Winkelmarken (20) gebildet ist und dass
d. die Informationsmarke (40) an der einen Seite durch eine im Vergleich zur Mehrzahl der Winkelmarken (20) verbreiterte Winkelmarke (50) begrenzt wird, so dass in Abhängigkeit von der Drehrichtung (A, B) des Geberrads (10) unterschiedliche Signalfolgen im Sensorelement (60) generierbar sind.

2. Vorrichtung (1) nach Anspruch 1, **dadurch gekennzeichnet, dass** die Winkelmarken (20, 50) durch auf dem Umfang des Geberrads (10) verteilte Zähne (20, 50) ausgebildet sind und dass die Informationsmarke (40) als Referenzlücke (40) ausgebildet ist.

3. Vorrichtung (1) gemäß Anspruch 2, **dadurch gekennzeichnet, dass** die an die Referenzlücke (40) angrenzenden Zähne (20, 50) unterschiedliche Breiten aufweisen, um in Abhängigkeit von der Drehrichtung (A, B) des Geberrads (10) unterschiedliche zeitliche Abfolgen der durch die Zähne (20, 50) erzeugten fallenden Signalflanken zu generieren.

4. Vorrichtung (1) gemäß einem der vorhergehenden Ansprüche, **dadurch gekennzeichnet, dass** mindestens zwei Informationsmarken (40) gleichmäßig auf dem Umfang des Geberrads (10) voneinander beabstandet sind.

## Claims

1. Device (1) for detecting the angular position of a crankshaft or a camshaft of an internal combustion engine, comprising the following features:
a. An encoding wheel (10) that is connected directly or indirectly to the crankshaft or to the camshaft, and on the circumference of which are arranged angle marks (20, 50) distributed at equal angular spacings and at least one information mark (40),
b. A sensor element (60) that is arranged adjacent to the circumference of the encoder wheel (10) such that it creates an electrical signal as a function of the angle marks (20, 50) that pass the sensor element (60),
**characterised in that**
c. the angle marks (20, 50) adjoining the information mark (40) are embodied differently, so that different signal sequences are able to be generated in the sensor element (60) as a function of the direction of rotation (A, B) of the encoder wheel (10).

2. Device (1) according to claim 1, **characterized in that** the angle marks (20, 50) are embodied by teeth (20, 50) distributed around the circumference of the encoder wheel (10) and that the Information mark (40) is embodied as a reference gap (40) by a larger angular spacing than that of the equal angular spacings between two adjacent teeth (20).

3. Device (1) according to claim 2, **characterized in that** the teeth (20, 50) adjoining the reference gap (40) have different widths, in order, as a function of the direction of rotation (A, B) of the encoder wheel (10), to generate different chronological sequences of the falling signal edges generated by the teeth (20, 50).

4. Device (1) according to one of the previous claims, **characterized in that** at least two information marks (40) are spaced evenly from each other on the circumference of the encoder wheel (10).

## Revendications

1. Dispositif (1) pour la détection de la position angulaire d'un vilebrequin ou d'un arbre à cames d'un moteur à explosion, qui comprend les caractéristiques suivantes :
a) une roue émettrice (10) qui peut être reliée solidairement en rotation, directement ou indirectement, au vilebrequin ou à l'arbre à cames et à la périphérie de laquelle sont disposées des marques angulaires (20, 50) réparties à des distances angulaires uniformes, et au moins une marque d'information (40),
b) un élément capteur (60) qui est disposé à proximité de la périphérie de la roue émettrice (10), de manière à produire un signal électrique en fonction des marques angulaires (20, 50) passant au droit de l'élément capteur (60),
**caractérisé en ce que :**
c) la marque d'information (40) est formée de deux marques angulaires manquantes (20) uniformément espacées, et **en ce que**
d) la marque d'information (40) est limitée sur un côté par une marque angulaire (50) qui est élargie comparativement à la pluralité des marques angulaires (20), de sorte que, selon le sens de rotation (A, B) de la roue émettrice (10), des suites de signaux différentes peuvent être générées dans l'élément capteur (60).

2. Dispositif (1) selon la revendication 1, **caractérisé en ce que** les marques angulaires (20, 50) sont formées par des dents (20, 50) réparties sur la périphérie de la roue émettrice (10) et **en ce que** la marque d'information (20) est constituée par une lacune de référence (40).

3. Dispositif (1) selon la revendication 2, **caractérisé en ce que** les dents (20, 50) adjacentes à la lacune de référence (40) présentent des largeurs différentes, pour générer, en fonction du sens de rotation (A, B) de la roue émettrice (10), des successions temporelles différentes des flancs de signaux descendants qui sont produits par les dents (20, 50).

4. Dispositif (1) selon une des revendications précédentes, **caractérisé en ce qu'**au moins deux marques d'information (40) sont espacées uniformément l'une de l'autre sur la périphérie de la roue émettrice (10).
